# EUROPÄISCHE PATENTSCHRIFT

(11) **EP 3 803 448 B1**
(45) Veröffentlichungstag und Bekanntmachung des Hinweises auf die Patenterteilung: **03.09.2025**
(21) Anmeldenummer: 19729702.1
(22) Anmeldetag: 04.06.2019
(51) Int. Cl.: G01S 7/497, G01S 17/95, G01S 17/00, G01J 3/28

(54) **VERFAHREN UND ANORDNUNG ZUM KALIBRIEREN FLUGOBJEKTMONTIERTER SENSOREN**
METHOD AND ASSEMBLY FOR CALIBRATING FLYING-OBJECT-MOUNTED SENSORS
PROCÉDÉS ET ENSEMBLE POUR ÉTALONNER DES CAPTEURS MONTÉS SUR DES OBJETS VOLANTS

(30) Priorität: 04.06.2018 DE 102018208738
(43) Veröffentlichungstag der Anmeldung: 14.04.2021
(73) Patentinhaber: Deutsches Zentrum für Luft- und Raumfahrt e.V., 51147 Köln (DE)
(72) Erfinder: BORG, Erik, 16247 Joachimsthal (DE); SCHMIDT, Karsten, 17235 Neustrelitz (DE)
(74) Vertreter: Patentanwälte Bressel und Partner mbB
(86) Internationale Anmeldenummer: PCT/EP2019/064533
(87) Internationale Veröffentlichungsnummer: WO 2019/234047

(56) Entgegenhaltungen:
- CN-A- 107 422 323
- CN-B- 103 293 117
- US-B2- 9 052 236
- JOE TANSOCK ET AL: "Guidelines for Radiometric Calibration of Electro-Optical Instruments for Remote Sensing", NATIONAL INSTITUTE OF STANDARDS AND TECHNOLOGY, 1 May 2015 (2015-05-01), XP055498861, Retrieved from the Internet <URL:https://nvlpubs.nist.gov/nistpubs/hb/2015/NIST.HB.157.pdf> [retrieved on 20180810], DOI: 10.6028/NIST.HB.157
- WENBO SUN ET AL: "For the depolarization of linearly polarized light by smoke particles", JOURNAL OF QUANTITATIVE SPECTROSCOPY AND RADIATIVE TRANSFER, vol. 122, 9 April 2012 (2012-04-09), GB, pages 233 - 237, XP055616354, ISSN: 0022-4073, DOI: 10.1016/j.jqsrt.2012.03.031
- L. MAGRUDER ET AL: "In situ timing and pointing verification of the ICESat altimeter using a ground-based system", THE 3RD EAA EUROPEAN CONGRESS ON ACOUSTICS (FORUM ACUSTICUM 2002), vol. 32, no. 21, 10 November 2005 (2005-11-10), Sevilla, Spain, XP055615932, ISSN: 0094-8276, DOI: 10.1029/2005GL023504

## Beschreibung

Die Erfindung betrifft ein Verfahren und eine Anordnung zum Kalibrieren flugobjektmontierter Sensoren.

Zur Fernerkundung von Objekten, insbesondere von Himmelskörpern und/oder bestimmten Oberflächenbereichen von Himmelskörpern, ist es bekannt, flugobjektmontierte Sensoren zu verwenden. Diese können beispielsweise dazu eingerichtet sein, thermische und/oder elektromagnetische Strahlung zu erfassen, die von dem Himmelskörper emittiert oder zumindest reflektiert wird. Insbesondere können optoelektronische Sensoren verwendet werden. Die daraus gewonnenen Messdaten können zum Erzeugen von Bilddaten und/oder thermischen Daten verwendet werden. Bei dem Flugobjekt kann es sich um einen Satelliten, eine Drohne, ein Flugzeug oder dergleichen handeln.

Um eine ausreichende Genauigkeit der Messdaten zu gewährleisten, ist es erforderlich, die Sensoren zu kalibrieren. Insbesondere ist es vorteilhaft, die Sensoren auch dann kalibrieren zu können, wenn sich diese bereits gemeinsam mit dem Flugobjekt relativ zu dem Himmelskörper bewegen und insbesondere diesen umkreisen. Das Kalibrieren in einem solchen Zustand kann auch als in-situ-Kalibrieren oder in-orbit-Kalibrieren bezeichnet werden. Eine solche Kalibrierung kann auch in vorbestimmten Zeitabständen ausgeführt werden, um auf Alterungserscheinungen oder Verschleiß zu reagieren. Regelmäßige Kalibrierung können auch in Anbetracht der Variabilität und der Dynamik der von dem Sensor empfangenen bzw. ausgewerteten Signale erforderlich sein. Die Variabilität und Dynamik können beispielsweise aus dem breiten Spektrum verschiedener Oberflächenstrukturen entlang der Himmelskörperoberfläche resultieren.

Für das in-situ-Kalibrieren von Fernerkundungsflugobjekten (oder genauer gesagt von deren Sensoren) sind Lösungen bekannt, bei denen von einer Himmelskörperoberfläche (zum Beispiel von der Erdoberfläche) elektromagnetische Strahlung ausgesendet wird. Diese wird von einem flugobjektmontierten Sensor erfasst. Aus den von dem Sensor tatsächlich erfassten Messdaten (d. h. den Istwerten) sowie einem erwarteten Sollwert dieser Messdaten kann daraufhin eine Differenz gebildet werden, um den Sensor zu kalibrieren. Insbesondere kann ein Korrekturwert ermittelt werden, der die Abweichung der tatsächlich erfassten Messdaten von den erwarteten Sollwerten betrifft. Dieser Korrekturwert kann in an sich bekannter Weise zum Korrigieren zukünftig erfasster Messdaten verwendet werden. Im Ergebnis erhöht die Kalibrierung somit die Messgenauigkeit, da die Messdaten geeignet korrigiert werden.

Die US 9,052,236 B2 offenbart in diesem Zusammenhang, elektromagnetische Strahlung in Form von Laserstrahlung auf den Sensor eines Fernerkundungsflugobjekt zu richten. In der vorstehend beschriebenen Weise kann daraufhin eine in-situ-Kalibrierung dieses Sensors erfolgen.

Die US 9,052,236 B2 erkennt bereits an, dass die Kalibriergenauigkeit und somit auch die allgemeine Messgenauigkeit durch verschiedenste Einflüsse beeinträchtigt werden. Um zum Beispiel unerwünschte Atmosphäreneinflüsse auszuschließen, die die ausgesendete elektromagnetische Strahlung vor dem Erreichen des Sensors abschwächen und somit die von dem Sensor erfassten Messdaten verfälschen können, wird vorgeschlagen, möglichst kurze Laserpulse zu verwenden. Es wird auch auf die Möglichkeit einer Atmosphärenkorrektur verwiesen, ohne dies jedoch näher zu erläutern.

Beispielsweise wird im Zusammenhang mit einem anderweitigen Kalibriervorgang, der die Streulichtempfindlichkeit der flugobjektmontierten Sensoren im Orbit betrifft, auf eine rein theoretische Atmosphärenkorrektur verwiesen.

Übergeordnet setzt die US 9,052,236 B2 ferner voraus, dass das Kalibrieren während der Nacht und bei klaren Atmosphärenverhältnissen durchgeführt wird ("clear-sky conditions"). Bei anderen bekannten Systemen ist ferner vorgesehen, das Kalibrieren nur über bestimmten Bereichen der Erdoberfläche durchzuführen, die sich durch vorteilhafte geographische Eigenschaften auszeichnen (zum Beispiel über Wüsten,Salzseen oder Eisflächen in polaren Regionen). Diese Varianten begrenzen jedoch entsprechend die Flexibilität. Zusätzlich können Sie sich auch negativ auf die Messgenauigkeit auswirken, da die tatsächlichen Messbedingungen von denjenigen während der Kalibrierung stark abweichen können (zum Beispiel bei einem Fernerkunden von Zentraleuropa anstelle eines Gebiets mit Salzseen).

Die CN 107 422 323 A offenbart eine Lösung zur Phasensynchronisierung im Kontext satellitengebundener Systeme.

Eine Aufgabe der vorliegenden Erfindung ist, die Messgenauigkeit von flugobjektmontierten Sensoren insbesondere für die Fernerkundung von Himmelskörpern zu verbessern.

Diese Aufgabe wird durch die Gegenstände der beigefügten unabhängigen Ansprüche gelöst. Vorteilhafte Weiterbildungen sind in den abhängigen Ansprüchen angegeben.

Die Erfinder haben erkannt, dass keiner der Ansätze der US 9,052,236 B2 eine ausreichende Kalibrier- und somit Messgenauigkeit gewährleistet. Zum Beispiel können auch bei dem Verwenden kurzer Laserpulse Atmosphäreneinflüsse nicht stets vollständig ausgeschlossen werden. Das Verwenden einer lediglich theoretischen Atmosphärenkorrektur stellt hingegen eine Vereinfachung dar, mit der die tatsächlichen Atmosphärenbedingungen nicht ausreichend berücksichtigt werden können. Durch das Vorgeben bestimmter Bedingungen zum Ausführen des Kalibrierens wird andererseits die Flexibilität und auch die spätere Messgenauigkeit beeinträchtigt (s.o.: Nacht und klare Verhältnisse).

Um derartige Nachteile zu überwinden, werden ein Verfahren und eine Anordnung gemäß den beigefügten unabhängigen Ansprüchen vorgeschlagen. Vorteilhafte Weiterbildungen sind in den abhängigen Ansprüchen angegeben.

Allgemein sieht die Erfindung vor, tatsächliche Atmosphäreneigenschaften zu ermitteln und bei dem Kalibrieren (insbesondere bei einem in-situ-Kalibrieren) flugobjektmontierter Sensoren zu berücksichtigen. Wie nachstehend erläutert, kann hierzu zum Beispiel ein rückgestreuter Anteil der ausgesendeten elektromagnetischen Strahlung erfasst werden, um auf aktuell vorliegende Atmosphäreneigenschaften zu schließen.

Im Detail wird ein Verfahren zum Kalibrieren flugobjektmontierter Sensoren vorgeschlagen, umfassend die Schritte:
- Aussenden elektromagnetischer Strahlung von der Oberfläche eines Himmelskörpers oder von einem Strahlungs-Flugobjekt;
- Erfassen eines von der Atmosphäre des Himmelskörpers rückgestreuten Anteils der Strahlung;
- Erfassen der ausgesendeten Strahlung mittels wenigstens eines Sensors, der an einem sich relativ zu dem Himmelskörper oder dem Strahlungs-Flugobjekt bewegenden Flugobjekt montiert ist, und Ableiten von Messdaten basierend auf dieser Erfassung; und
- Kalibrieren des Sensors auf Basis der Messdaten und des rückgestreuten Anteils der ausgesendeten Strahlung.

Bei dem Himmelskörper kann es sich um einen Mond oder einen Planeten handeln und insbesondere um die Erde. Ebenso kann es sich um anderweitige Himmelskörper handeln, insbesondere wenn dieser über eine eigene Atmosphäre verfügt. Das Flugobjekt und/oder das Strahlungs-Flugobjekt kann in Form eines Satelliten, einer Drohne, eines Flugzeugs oder dergleichen ausgebildet sein. Im Fall des Strahlungs-Flugobjekts kann dieses auch eine Strahlquelle (z.B. eine Laserquelle) und vorzugsweise auch eine Optik z.B. zur Strahlformung umfassen.

Die elektromagnetische Strahlung wird in Form eines Laserstrahls ausgesendet. Allgemein kann die elektromagnetische Strahlung eine Frequenz im Frequenzbereich (bzw. Spektralbereich) von einschließlich ultraviolettem Licht bis zu einschließlich Infrarotlicht aufweisen. Die elektromagnetische Strahlung kann wenigstens eine der nachfolgenden Eigenschaften aufweisen:
- eine definierte Polarisation;
- eine definierte Frequenz bzw. Wellenlänge;
- eine definierte Ausbreitungsrichtung oder, anders ausgedrückt, eine definierte Strahlachsenausrichtung;
- eine definierte Intensität;
- ein definiertes Strahlprofil (insbesondere ein Intensitätsprofil, wie z.B. ein Gauss- oder Top-Hat-Profil);
- eine definierte Querschnittsform und/oder Querschnittsgröße des Strahls.

Die Definition der entsprechenden Eigenschaften kann nach Maßgabe des Sensors erfolgen, mit dem die Strahlung erfasst werden soll. Beispielsweise kann die Querschnittsgröße des Strahls geeignet definiert werden, um eine ausreichende Abdeckung des Sensors zu erreichen. Zusätzlich oder alternativ kann die Definition der entsprechenden Eigenschaften nach Maßgabe einer Position und/oder Flugbahn des Flugobjekts und somit des daran montierten Sensors erfolgen. Hierdurch kann gewährleistet werden, dass der Sensor mit einer ausreichenden Sicherheit bestrahlt wird. Für das Festlegen der Eigenschaften können geeignete Werte vorab hinterlegt und bei Bedarf ausgelesen werden und/oder nach Maßgabe der aktuellen Kalibrierbedingungen berechnet werden.

Sollen mehrere verschiedene Flugobjekte und/oder Sensoren mittels ein und derselben Strahlungsquelle kalibriert werden, welche die elektromagnetische Strahlung aussendet, kann jegliche der vorstehenden Eigenschaften nach Maßgabe des aktuell zu kalibrierenden Sensors bzw. Flugobjekts individuell eingestellt werden.

Wie nachstehend noch näher erläutert, wird für das Aussenden der elektromagnetischen Strahlung ein Lidar-System verwendet, insbesondere ein Raman-Lidar-Rückstreu - System (kurz Raman-Lidar oder Raman-Lidar-System) oder ein differenzielles Absorptions-Lidar. Derartige Lidar-Systeme (lidar: "Light Detection And Ranging" oder "Light Imaging, Detection And Ranging") kann eine oder mehrere der folgenden Einheiten umfassen: ein Laser mit ausreichend hoher Leistung, eine optische Vorrichtung (beispielsweise zur Fokussierung des Laserstrahls), ein Empfangsteleskop, Fotodetektoren, eine Empfängerelektronik zum Empfang von rückgestreuten Lasersignalen. Das System kann derart ausgebildet sein, dass es möglich ist, die Intensität, die Frequenz und/oder die Polarisation der Laserstrahlung zu ändern, um die Kalibration der Sensoren bei verschiedenen Intensitäten, Frequenzen und/oder Polarisationen durchzuführen.

Bezüglich Raman-Lidar-Systemen ist ferner folgendes festzuhalten:
- Als Raman-Streuung (auch Raman-Effekt oder Smekal-Raman-Effekt) wird die unelastische Streuung von Licht an Atomen oder Molekülen bezeichnet. Durch die unelastische Wechselwirkung findet eine Energieübertragung statt, d. h., das von den Atomen oder Molekülen emittierte Streulicht besitzt eine höhere oder niedrigere Frequenz als der einfallende Lichtstrahl. Durch die Energieübertragung ändert sich die Rotations- und Schwingungsenergie des beteiligten Atoms bzw. Moleküls. Beide Richtungen der Energieübertragung sind möglich. Die Energiedifferenz zwischen eingestrahltem und gestreutem Photon ist charakteristisch für das streuende Atom bzw. Molekül. Die Raman-Streuung ist kein Resonanzphänomen. Die Streuung erfolgt hier - wie beispielsweise auch die Rayleigh-Streuung - über virtuelle Niveaus, tritt also auch für Photonenenergien außerhalb einer atomaren Resonanz auf. Wenn die Frequenz des anregenden Photons jedoch resonant ist mit einem elektronischen Übergang im Atom bzw. Molekül, dann ist die Streueffizienz wesentlich erhöht. Raman-Lidar-Systeme können derart ausgebildet sein, dass sie diesen Effekt ausnutzen können. Insbesondere können nicht nur Rückstreusignale bei der bzw. den ausgesendeten Wellenlänge(n) empfangen werden, sondern auch bei anderen Frequenzen. Dadurch kann ermöglicht werden, Atome bzw. Moleküle in der Atmosphäre zu detektieren. Werden anstelle von Raman-Lidar-Systemen Differentielle-Absorptions-Lidar-Systeme verwendet, können diese ebenfalls derart ausgebildet sein, dass es möglich ist, Beiträge verschiedener Moleküle in der Atmosphäre zu detektieren. Raman-Lidar-Systeme können auch derart ausgebildet sein, dass sie in der Lage sind, Temperaturprofile in der Atmosphäre zu messen. Beispielsweise können sie die Temperaturabhängigkeit von Rotations-Raman-Banden von bestimmten Gasen wie z.B. Stickstoff oder Sauerstoff ausnutzen. Raman-Lidar-Systeme können schließlich dazu ausgebildet sein, gleichzeitig Rückstreu- und Extinktionsprofile getrennt zu bestimmen. Damit sind keine Annahmen über Lidar-Verhältnisse (Verhältnis zwischen Extinktion und Rückstreuung) bei nachfolgenden Atmosphärenkorrekturen notwendig.

Sämtliche der vorstehenden Eigenschaften von Lidar-Systemen bzw. Raman-Lidar-Systemen können auch im Rahmen des vorliegenden Verfahrens und der vorliegenden Anordnung vorgesehen sein. Allgemein ist jedoch zu betonen, dass bisher keine Lidar-Systeme (oder auch eine anderweitige Strahlungsquelleneinheit) für das in-situ-Kalibrieren von flugobjektmontierten Sensoren eingesetzt werden, mit denen gleichzeitig Informationen für eine Atmosphärenkorrektur gewonnen werden.

Das Lidar-System (oder auch eine anderweitige allgemeine Strahlungsquelleneinheit) kann über eine eigene Stromversorgung sowie über ein Positions- und Navigationssystem verfügen. Es kann auch vorgesehen sein, die Position und Ausrichtung eines Lidar-Systems zu ändern. Insbesondere kann das Lidar-Systeme schwenkbar sein. Dies kann zum Beispiel relevant sein, wenn mehrere Lidar-Systeme in der nachfolgend erläuterten Weise zu einem Kalibrierungsfeld zusammengeschlossen werden, um ein gewünschtes Strahlungsfeld zum Kalibrieren zu erzeugen.

Das Erfassen des von der Atmosphäre rückgestreuten Strahlungsanteils kann mittels derselben Einheit erfolgen, die auch die elektromagnetische Strahlung aussendet (insbesondere mittels desselben Lidar-Systems). Hierfür kann die aussendende Einheit einen geeigneten Sensor zum Erfassen der Rückstreuung umfassen, zum Beispiel Fotodetektoren und/oder eine Empfängerelektronik.

Bei dem Verfahren und der Anordnung kann der Sensor an einem Flugobjekt montiert sein, der zur Fernerkundung des Himmelskörpers dient und/oder den Himmelskörper umkreist. Der Sensor kann allgemein dazu eingerichtet sein, die auftreffende und ursprünglich von der Oberfläche des Himmelskörpers ausgesendete elektromagnetische Strahlung zu erfassen. Daraufhin können Eigenschaften dieser auftreffenden Strahlung und insbesondere deren Intensität ermittelt werden. Der Sensor kann insbesondere ein optoelektronischer Sensor sein.

Die abgeleiteten Messdaten können elektronisch und/oder nicht-elektronisch sowie digital und/oder analog bereitgestellt werden. In einer Ausführungsform betreffen die Messdaten eine ermittelte Eigenschaft der auftreffenden Strahlung und insbesondere deren Intensität. Die Messdaten können innerhalb des Flugobjekts (zum Beispiel in einer Recheneinheit hiervon) erstellt und/oder ausgewertet werden. Zusätzlich oder alternativ können die Messdaten (oder auch lediglich die Erfassungssignale des Sensors, aus denen erst anschließend die Messdaten abgeleitet werden) an eine separat von dem Flugobjekt bereitgestellte Recheneinheit übertragen werden. Eine solche Recheneinheit kann in einem Bodenkontrollzentrum bereitgestellt sein, das sich zum Beispiel auf der Erde befinden kann. In gleicher Weise kann das Kalibrieren des Sensors in einer flugobjektintegrierten Recheneinheit oder in einer separat hiervon bereitgestellten Recheneinheit erfolgen.

Allgemein kann das Kalibrieren vorsehen, Werte und/oder Parameter zur Korrektur zukünftiger Messdaten des Sensors zu ermitteln. Anders ausgedrückt können zukünftig gewonnenen Messdaten des Sensors auf Basis der durchgeführten Kalibrierung korrigiert werden. Übergeordnet können durch das Kalibrieren Alterungserscheinungen des Sensors oder anderweitige Ungenauigkeiten kompensiert werden.

Um die Güte der Kalibrierung zu verbessern, sieht das Verfahren (und auch die nachfolgend erläuterte Anordnung) vor, auch den erfassten rückgestreuten Anteil der ausgesendeten Strahlung zu berücksichtigen. Hierdurch kann beispielsweise gewährleistet werden, dass eine Abschwächung der ausgesendeten Strahlung durch die Atmosphäre, die allgemein vor einem Auftreffen der Strahlung auf dem Sensor des Flugobjekts stattfindet, berücksichtigt wird. Erfolgt dies nicht, könnten das Messsignal und/oder die Messdaten des Sensors fälschlicherweise als zu niedrig eingestuft werden. Folglich könnte eine an sich nicht vorhandene Ungenauigkeit des Sensors vermutet oder eine ungeeignete Kalibrierung vorgenommen werden. Anders ausgedrückt können das Verfahren und die Anordnung zumindest in bestimmten Ausführungsformen ermöglichen, dass insbesondere eine Abschwächung der ausgesendeten Strahlung durch die Atmosphäre berücksichtigt wird und die vorstehend geschilderten Fehleinschätzungen bezüglich der Funktionsfähigkeit des Sensors vermieden werden.

Das Messsignal und/oder die Messdaten des Sensors können folglich atmosphärenbereinigt oder, anders ausgedrückt, atmosphärenkorrigiert ermittelt und/oder weiterverarbeitet werden. Die in der Regel stark variierenden und schwer vorherzusagenden Einflüsse der Atmosphäre auf den Kalibriervorgang können daher reduziert oder sogar im Wesentlichen vollständig ausgeschlossen werden. Dies erhöht die Kalibriergenauigkeit. Weiterhin kann hierdurch ausgeschlossen werden, dass der Kalibriervorgang nur zu bestimmten Tageszeiten oder Atmosphärenbedingungen durchführbar ist, geschweige denn über nur ausgewählten Oberflächenbereichen des Himmelskörpers. Wie gezeigt, können stattdessen auch veränderliche und/oder unbekannte Atmosphärenbedingungen beim Durchführen des Kalibriervorgangs ermittelt und angemessen berücksichtigt werden. Dies kann entsprechend die Flexibilität und auch die Messgenauigkeit erhöhen, da das Kalibrieren nicht an eng definierte und für das spätere Fernerkunden gegebenenfalls gar nicht relevante Bedingungen geknüpft werden muss.

Gemäß einer weiteren Variante von Anordnung und Verfahren ist ferner ein Schritt des Ermittelns eines Atmosphärenkorrekturwertes basierend auf dem rückgestreuten Anteil der elektromagnetischen Strahlung vorgesehen. Der Atmosphärenkorrekturwert kann derart gewählt sein, dass ein sich auf die Messdaten des Sensors auswirkender Einfluss der Atmosphäre (und insbesondere ein sich negativ auswirkender und/oder verfälschender Einfluss) hierdurch korrigiert und/oder kompensiert wird.

Gemäß einer Ausführungsform von Anordnung und Verfahren betrifft der Atmosphärenkorrekturwert die Abschwächung der ausgesendeten elektromagnetischen Strahlung durch die Atmosphäre. In diesem Fall kann der Atmosphärenkorrekturwert einen Prozentwert betreffen, der den Anteil der abgeschwächten (d.h. den Sensor nicht erreichenden) Strahlung betrifft oder aber den Strahlungsanteil, der den Sensor schlussendlich erreicht. Zusätzlich oder alternativ kann ein Absolutwert angegeben werden, der zum Beispiel den Intensitätswert betrifft, um den die ausgesendete elektromagnetische Strahlung infolge der Atmosphärenabschwächung gemindert wird.

Um den Atmosphärenkorrekturwert zu ermitteln und insbesondere um die Atmosphärenabschwächung beziffern und/oder berechnen zu können, kann bei der Anordnung und dem Verfahren wenigstens eine der folgenden Eigenschaften der Atmosphäre ermittelt werden:
- zumindest ein Teil der chemischen Zusammensetzung der Atmosphäre;
- wenigstens ein Temperaturwert der Atmosphäre;
- die Extinktion der ausgesendeten Strahlung durch die Atmosphäre;
- ein Rückstreuprofil der Atmosphäre.

Unter dem Ermitteln von zumindest einem Teil der chemischen Zusammensetzung der Atmosphäre kann zum Beispiel das Ermitteln einer vorbestimmten Anzahl von Elementen, Gasen oder Spurengasen verstanden werden. Beispielsweise können die zwei, drei oder eine beliebige andere Anzahl von Gasen oder Spurengasen ermittelt werden, welche die höchste Konzentration in der Atmosphäre aufweisen. Das Ermitteln der Extinktion kann das Ermitteln des Extinktionsparameters der Atmosphäre umfassen.

Der rückgestreute Anteil der Strahlung kann einen aus der Atmosphäre und zu der Oberfläche des Himmelskörpers rückgestreuten Strahlungsanteil umfassen. Gemäß einer Ausführungsform von Anordnung und Verfahren können das Aussenden der Strahlung und das Erfassen des rückgestreuten Anteils im Wesentlichen in demselben Bereich des Himmelskörpers stattfinden. Beispielsweise können das Aussenden und das Erfassen in dem im Wesentlichen selben Oberflächenbereich oder in der im Wesentlichen selben Oberflächenposition des Himmelskörpers stattfinden. Hierfür kann zum Beispiel eine integrierte Einheit bzw. Strahlungsquelleneinheit bereitgestellt werden, zum Beispiel in Form eines vorstehend geschilderten Lidar-Systems, welche sowohl die elektromagnetische Strahlung aussendet als auch den rückgestreuten Strahlungsanteil erfasst.

Bei einer weiteren Variante von Anordnung und Verfahren ist ferner der folgende Schritt vorgesehen:
- Erstellen von Bilddaten und/oder thermischen Daten basierend auf den abgeleiteten Messdaten.

Dieser Schritt wird vorzugsweise von einer separat von dem Flugobjekt bereitgestellten Recheneinheit ausgeführt (zum Beispiel einer Recheneinheit in einem Bodenkontrollzentrum). Ferner wurde der Sensor hierfür vorzugsweise gemäß einem der vorangehenden Aspekte bereits vorab kalibriert, sodass lediglich Messdaten mit einer ausreichend hohen Genauigkeit herangezogen und ausgewertet werden.

Wie vorstehend geschildert, können die Messdaten einen Intensitätswert der erfassten elektromagnetischen Strahlung betreffen. Insbesondere können die Messdaten den entsprechenden Intensitätswert angeben, ihn beziffern oder Informationen enthalten, aus denen der Intensitätswert abgeleitet werden kann. Die entsprechenden Intensitätswerte können dann in Bilddaten umgerechnet und grafisch dargestellt werden, beispielsweise durch Zuordnen von Farben zu einzelnen Intensitätswertebereichen.

Bei der Anordnung und dem Verfahren kann ferner vorgesehen sein, dass der Schritt des Kalibrierens das Berücksichtigen eines Sollwertes der Messdaten umfasst, insbesondere wobei der Sollwert in Abhängigkeit der Intensität der ausgesendeten elektromagnetischen Strahlung ermittelt wird. Der Sollwert kann zum Beispiel einen eigentlich erwarteten Wert der Messdaten betreffen, wenn vorbestimmte und insbesondere im Wesentlichen störungs- oder abschwächungsfreie Atmosphärenbedingungen vorherrschen. Der Sollwert kann vorab hinterlegt und bedarfsweise ausgelesen werden und/oder bedarfsweise berechnet werden. Dies kann insbesondere unter Berücksichtigung aktueller Messbedingungen wie zum Beispiel der Intensität der ausgesendeten Strahlung erfolgen. Der Sollwert kann unter Laborbedingungen oder im Rahmen einer Laborkalibrierung gewonnen werden.

In diesem Zusammenhang kann ferner vorgesehen sein, dass der Schritt des Kalibrierens das Ermitteln eines Sensorkalibrierwerts umfasst, der aus der Differenz des Sollwertes der Messdaten und der tatsächlich abgeleiteten Messdaten (d. h. der Istwerte) unter Berücksichtigung des Atmosphärenkorrekturwerts ermittelt wird. Beispielsweise kann der Atmosphärenkorrekturwert vor bzw. bei dem Bilden der genannten Differenz von dem Sollwert der Messdaten subtrahiert werden. Der Sollwert kann folglich um die durch den Atmosphärenkorrekturwert bezifferte Abschwächung reduziert werden. Ebenso kann der Atmosphärenkorrekturwert zu den tatsächlich abgeleiteten Messdaten hinzuaddiert werden, um diese rechnerisch zu erhöhen und eine etwaige Abschwächung zu kompensieren. Der Sensorkalibrierwert kann auch als Korrekturwert oder Kalibrierwert bezeichnet werden, der im Rahmen der Kalibrierung ermittelt wird.

Die Erfindung betrifft ferner eine Anordnung zum Kalibrieren flugobjektmontierter Sensoren, wobei die Anordnung folgendes umfasst:
- eine Strahlungsquelleneinheit, die an einem Himmelskörper oder an einem Strahlungs-Flugobjekt angeordnet ist; und
- ein Flugobjekt, das sich relativ zu dem Himmelskörper oder dem Strahlungs-Flugobjekt bewegt;

wobei die Strahlungsquelleneinheit eine Strahlungsquelle in Form eines Lidar-Systems zum Aussenden elektromagnetischer Strahlung in die Atmosphäre des Himmelskörpers und eine Erfassungseinheit zum Erfassen eines aus der Atmosphäre des Himmelskörpers rückgestreuten Strahlungsanteils umfasst;
wobei das Flugobjekt wenigstens einen Sensor zum Erfassen der von der Strahlquelleneinheit ausgesendeten elektromagnetischen Strahlung umfasst; und
   wobei die Anordnung ferner eine Recheneinheit umfasst, die dazu eingerichtet ist, den Sensor des Flugobjekts basierend auf dem erfassten rückgestreuten Strahlungsanteil zu kalibrieren.

Bei dem rückgestreuten Strahlungsanteil handelt es sich um einen rückgestreuten Anteil der ursprünglich ausgesendeten elektromagnetischen Strahlung. Der Sensor kann allgemein lediglich denjenigen Anteil der ursprünglich ausgesendeten Strahlung erfassen, der ihn tatsächlich erreicht. Dies kann beispielsweise einen infolge einer Atmosphärenabschwächung entsprechend abgeschwächten ausgesendeten Strahlungsanteil betreffen. Die Recheneinheit kann, vorzugsweise wie vorstehend im Rahmen des Verfahrens erläutert, zum Kalibrieren des Sensors ferner Messdaten berücksichtigen, die aus der von dem Sensor erfassten Strahlung abgeleitet werden. Das Kalibrieren kann folglich auf Basis dieser Messdaten und des erfassten rückgestreuten Strahlungsanteils ausgeführt werden.

Übergeordnet kann die Anordnung jegliches weitere Merkmal umfassen, um sämtliche der vorstehend oder nachfolgend erläuterten Verfahrensschritte, Wechselwirkungen oder Effekte bereitzustellen. Bei dem Flugobjekt kann es sich wiederum um einen Fernerkundungsflugobjekt handeln, insbesondere zur Fernerkundung der Erde. Die Sensoren des Flugobjekts können eine optische und/oder thermische Erfassung des Himmelskörpers ausführen und sind vorzugsweise als optoelektronische Sensoren ausgebildet.

Im Zusammenhang mit dem erfindungsgemäßen Verfahren und der Anordnung können ferner weitere Aspekte vorgesehen sein:
- Es können mehrere Strahlungsquelleneinheiten der vorstehend erläuterten Art (nämlich in Form von Lidar-Systemen oder Raman-Lidar-Systemen) zu einem sogenannten Kalibrierungsfeld räumlich und/oder steuerungstechnisch zusammengefasst werden. Beim Überfliegen des Kalibrierungsfeldes kann das Flugobjekt somit mit mehreren Strahlungsquelleneinheiten oder auch nur ausgewählten hiervon wechselwirken, um seinen Sensor zu kalibrieren. Allgemein kann es sich bei dem Kalibrierungsfeld um eine technische Einrichtung handeln, die vorzugsweise aus einer Anzahl regelmäßiger oder unregelmäßig angeordneter Lidar-Systeme besteht. Die Lidar-Systeme sind vorzugsweise Raman-Rückstreu-Lidar-Systeme (kurz Raman-Lidar oder Raman-Lidar-System). Das Kalibrierungsfeld kann darüber hinaus Kontroll- und/oder Steuereinheiten umfassen, die eine freie Konfiguration der Lidar-Systeme ermöglichen (z.B. die Anordnung und Ausrichtung der Lidar-Systeme bzw. von dessen Laserstrahlen, die Änderung der Intensität, Wellenlänge und Polarisation des Laserlichts der einzelnen Lidar-Systeme), sowie entsprechende Kommunikationseinheiten und eine Stromversorgung. Das Kalibrierungsfeld kann auf der Erdoberfläche oder der Oberfläche anderer fester Himmelskörper installiert werden und dient zur Kalibrierung von optoelektronischen Sensoren an Bord von Flugobjekten oder anderen Flugobjekten wie z.B. Flugzeuge oder Drohnen, die um die Erde bzw. Himmelskörper zum Zwecke der Erkundung kreisen. Übergeordnet kann im Rahmen der vorliegenden Offenbarung jegliches Lidar-System beweglich sein, so dass dessen Strahlrichtung in einem bestimmten Winkelraum verändert werden kann. Zu diesem Zweck können die Systeme beispielsweise jeweils um zwei Achsen beweglich sein (zum Beispiel Elevation und Azimut).
- Das Flugobjekt kann ebenfalls mit einer Strahlungsquelleneinheit und insbesondere einer Erfassungseinheit zum Erfassen der Rückstreuung einer von der Strahlungsquelleneinheit ausgesendeten elektromagnetischen Strahlung ausgestattet sein. Somit können in der gleichen Weise wie vorstehend beschrieben Eigenschaften der Atmosphäre bestimmt werden, insbesondere eine etwaige Abschwächung der ausgesendeten Strahlung durch die Atmosphäre. Diese Informationen können redundant und/oder alternativ zu den Messinformationen der himmelskörpergebundenen Strahlungsquelleneinheit verwendet werden. Das Ausbilden eines Flugobjekts und insbesondere eines Satelliten mit einer entsprechenden Strahlungsquelleneinheit (zum Beispiel in Form eines Lidar-Systems und insbesondere eines Raman- Lidar-Systems), mit der ein von der Atmosphäre zurückgestreuter Strahlungsanteil ermittelt werden kann, bildet einen eigenständigen Erfindungsgedanken, der auch unabhängig von den Merkmalen der vorliegenden unabhängigen Ansprüche weiterverfolgt werden kann. Die hierdurch gewonnenen Informationen oder Messdaten können optional an eine Bodenstation übertragen werden und allgemein zur Atmosphärenkorrektur während der eigentlichen Kalibrierung herangezogen zu werden.
- Übersteigt die Abschwächung der Laserstrahlung durch die Atmosphäre ein bestimmtes Maß - zum Beispiel verursacht durch zu starke elastische und unelastische Streuung des Laserlichts in der Atmosphäre -, so dass an den Sensoren keine oder nur schwache Signale mit einem kleinen Signal-RauschVerhältnis ankommen, so kann das Durchführen von Kalibrationsmessungen unterbunden werden. Bei dem nächsten Überflug des Satelliten oder Flugkörpers über die Strahlungsquelleneinheit können diese Messungen wiederholt werden.

Gemäß einem weiteren Aspekt der Erfindung wird ein Verfahren vorgeschlagen, umfassend die Schritte:
- Aussenden elektromagnetischer Strahlung von der Oberfläche eines Himmelskörpers oder von einem Strahlungs-Flugobjekt;
- Erfassen eines von der Atmosphäre des Himmelskörpers rückgestreuten Anteils der Strahlung;
- Erfassen der ausgesendeten Strahlung mittels wenigstens eines Sensors, der an einem sich relativ zu dem Himmelskörper oder dem Strahlungs-Flugobjekt bewegenden Flugobjekt montiert ist, und Ableiten von Messdaten basierend auf dieser Erfassung;
- Ermitteln eines Atmosphärenkorrekturwertes basierend auf dem rückgestreuten Anteil der elektromagnetischen Strahlung.

Insbesondere kann ein Schritt des Ermittelns, der Speicherung und/oder der Verwendung des Atmosphärenkorrekturwerts für andere Auswertungsanwendungen von Fernerkundungsdaten als die der zuvor genannten Kalibration vorgesehen sein. Insbesondere kann im Rahmen des Verfahrens vorgesehen sein, sowohl eine Kalibrierung als auch eine andere Auswertung auf Basis des Atmosphärenkorrekturwerts durchzuführen. Insbesondere können dabei tatsächlich von dem Flugobjekt und/oder Sensor gelieferte Messdaten geeignet korrigiert und ausgewertet werden. Allgemein kann also ein Schritt des Auswertens der Messdaten unter Berücksichtigung des Atmosphärenkorrekturwerts vorgesehen sein.

Im gleichen Sinne betrifft die Erfindung ferner eine Anordnung, mit:
- einer Strahlungsquelleneinheit, die an einem Himmelskörper oder an einem Strahlungs-Flugobjekt angeordnet ist; und
- einem Flugobjekt, das sich relativ zu dem Himmelskörper oder dem Strahlungs-Flugobjekt bewegt;

wobei die Strahlungsquelleneinheit eine Strahlungsquelle in Form eines Lidar-Systems zum Aussenden elektromagnetischer Strahlung in die Atmosphäre des Himmelskörpers und eine Erfassungseinheit zum Erfassen eines von der Atmosphäre des Himmelskörpers rückgestreuten Strahlungsanteils umfasst;
wobei das Flugobjekt wenigstens einen Sensor zum Erfassen der von der Strahlungsquelle ausgesendeten elektromagnetischen Strahlung umfasst; und
wobei die Anordnung ferner eine Recheneinheit umfasst, die dazu eingerichtet ist, einen Atmosphärenkorrekturwert basierend auf dem rückgestreuten Anteil der elektromagnetischen Strahlung zu ermitteln.

Die Recheneinheit kann ferner dazu eingerichtet sein, basierend auf der von dem Sensor erfassten elektromagnetischen Strahlung Messdaten zu erzeugen und/oder diese unter Berücksichtigung des Atmosphärenkorrekturwerts auszuwerten.

Für die beiden zuletzt genannten Aspekte (d.h. das letztgenannte Verfahren und die Anordnung) treffen sämtliche vorstehenden oder nachstehenden Erläuterungen und Weiterbildungen, die sich auf die gleichlautenden Merkmale beziehen, ebenfalls zu.

Ist bei den vorstehenden Verfahren oder Anordnungen ein Strahlungs-Flugobjekt zum Aussenden der elektromagnetischen Strahlung vorgesehen, kann dieses allgemein außerhalb der Troposphäre oder, mit anderen Worten, oberhalb einer Troposphärenoberkante angeordnet sein (d. h. oberhalb zum Beispiel ausgehend von der Erdoberfläche betrachtet). Hierdurch können die Einflüsse der Troposphäre gezielt ausgeschlossen werden.

Offenbart, aber nicht beansprucht, wird auch ein Verfahren, umfassend
- Aussenden elektromagnetischer Strahlung mit einem Strahlungs-Flugobjekt, das sich oberhalb von einer Atmosphärenoberkante befindet sein (z. B. oberhalb ausgehend von der Erdoberfläche betrachtet);
- Erfassen der ausgesendeten Strahlung mittels wenigstens eines Sensors, der an einem sich relativ zu dem Strahlungs-Flugobjekt bewegenden Flugobjekt montiert ist, und Ableiten von Messdaten basierend auf dieser Erfassung; und
- Kalibrieren des Sensors auf Basis der Messdaten.

Ebenso offenbart, aber nicht beansprucht, ist eine Anordnung, mit:
- einer Strahlungsquelleneinheit, die an einem Strahlungs-Flugobjekt angeordnet ist, das sich oberhalb von einer Atmosphärenoberkante befindet; und
- einem Flugobjekt, das sich relativ zu dem Strahlungs-Flugobjekt bewegt;

wobei die Strahlungsquelleneinheit eine Strahlungsquelle zum Aussenden elektromagnetischer Strahlung umfasst;
wobei das Flugobjekt wenigstens einen Sensor zum Erfassen der von der Strahlungsquelle ausgesendeten elektromagnetischen Strahlung umfasst; und wobei die Anordnung ferner eine Recheneinheit umfasst, die dazu eingerichtet ist, den Sensor des Flugobjekts basierend auf der erfassten elektromagnetischen Strahlung zu kalibrieren.

Auch für diese zuletzt genannten Aspekte (d.h. das letztgenannte Verfahren und die Anordnung) treffen sämtliche vorstehenden oder nachstehenden Erläuterungen und Weiterbildungen, die sich auf die gleichlautenden Merkmale beziehen, ebenfalls zu.

Im Folgenden wird eine Ausführungsform der Erfindung anhand der beigefügten schematischen Figuren erläutert. In ihrer Art und Funktion übereinstimmende Merkmale können dabei mit den gleichen Bezugszeichen versehen sein. Es stellen dar:
- Fig. 1: eine Prinzipskizze einer erfindungsgemäßen Anordnung, die ein erfindungsgemäßes Verfahren ausführt;
- Fig. 2: eine weitere Skizze der Anordnung aus Figur 1, in der einzelne Funktionseinheiten der Anordnung dargestellt sind;
- Fig. 3: eine Prinzipskizze einer erfindungsgemäßen Anordnung gemäß einem dritten Ausführungsbeispiel, die ein erfindungsgemäßes Verfahren ausführt; und
- Fig. 4: eine Prinzipskizze einer erfindungsgemäßen Anordnung gemäß einem vierten Ausführungsbeispiel, die ein erfindungsgemäßes Verfahren ausführt.

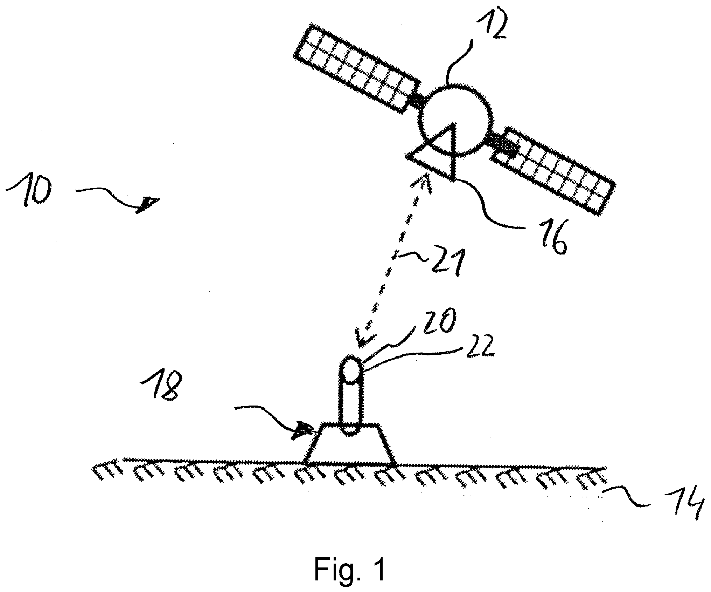

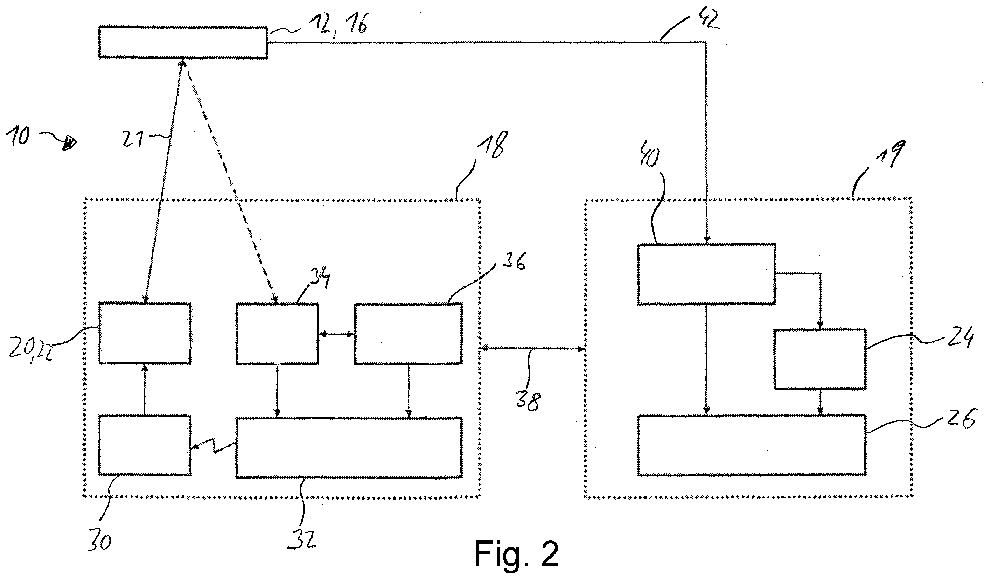

In Figur 1 ist eine Anordnung 10 gemäß einer Ausführungsform gezeigt, die eine Variante des erfindungsgemäßen Verfahrens ausführt. Die Anordnung 10 umfasst ein Flugobjekt in Form eines Satelliten 12, der einen Himmelskörper 14 umkreist. Bei dem Himmelskörper 14 handelt es sich in dem gezeigten Fall um die Erde und der Satellit 12 dient zur Fernerkundung der Erdoberfläche. Hierfür umfasst der Satellit 12 einen Sensor 16, der die Erdoberfläche optisch und/oder thermisch vermisst. Im gezeigten Fall ist der Sensor 16 insbesondere dazu ausgebildet, Licht (bzw. elektromagnetische Strahlung) im Spektralbereich von einschließlich Ultraviolett bis einschließlich Infrarot zu erfassen Die Daten des Sensors 16 werden drahtlos an ein nachstehend im Zusammenhang mit Figur 2 erläutertes Bodenkontrollzentrum 19 übertragen und dort zum Beispiel zum Erstellen von Bilddaten ausgewertet.

Der Satellit 12 wird in bekannter Weise in einer Umlaufbahn um dem Himmelskörper 14 gebracht. Dies bedeutet, dass der Satellit 12 zu Reparatur- und/oder Wartungszwecken und insbesondere zur Kalibrierung des Sensors 16 nicht mehr manuell zugänglich ist. Stattdessen sieht die Anordnung 10 vor, eine sogenannte in-situ- oder in-orbit-Kalibrierung des Sensors 16 durchzuführen. Hierfür umfasst die Anordnung 10 eine Strahlungsquelleneinheit 18, die in dem gezeigten Beispiel als Raman-Lidar-System ausgebildet ist.

Die Strahlungsquelleneinheit 18 ist an der Himmelskörperoberfläche angebracht und dazu ausgebildet, mittels einer Strahlungsquelle 20 elektromagnetische Strahlung in Form eines Laserstrahls 21 auszusenden. Der Laserstrahl 21 weist unter anderem eine definierte Frequenz bzw. Wellenlänge auf, die in dem Erfassungsbereich des Sensor 16 liegt. Weiterhin wird der Laserstrahl 21 nach Maßgabe der aktuellen Position und/oder Ausrichtung des Satelliten 12 ausgerichtet, um den Sensor 16 zuverlässig bestrahlen zu können.

Je nach Lasertyp besitzt die Strahlung eine bestimmte Frequenz und Polarisation. Die vorliegend betrachteten Frequenzen liegen im Bereich vom ultravioletten über das sichtbare Licht bis zum Infrarotlicht. Im Fall einer durchstimmbaren Strahlungsquelle 20 ist die Frequenz des Laserstrahls 21 innerhalb einer bestimmten Bandbreite variabel einstellbar. Es kann auch möglich sein, dass die Strahlungsquelle 20 gleichzeitig Licht unterschiedlicher Wellenlängen emittiert (die fundamentale Wellenlänge (Grundmode) und höhere Harmonische (Moden)). Des Weiteren kann die Intensität der Strahlung während der Kalibrierung vorzugsweise fest aber prinzipiell variierbar sein (zum Beispiel zwischen aufeinanderfolgenden Kalibrierungen). Allgemein können bei verschiedenen Überflügen unterschiedliche Strahlintensitäten, Frequenzen und/oder Polarisationen zur Kalibrierung verwendet werden.

Das Richten des Laserstrahls 21 auf den Sensor 16 dient dazu, von dem Sensor 16 erfasste Messdaten mit eigentlich erwarteten Sollwerten zu vergleichen. Beispielsweise kann vorab ermittelt und/oder je nach aktuellen Bedingungen berechnet werden, welche Messdaten der Sensor 16 bei korrekter Funktionsweise und insbesondere in Abhängigkeit der ausgesendeten Intensität der elektromagnetischen Strahlung eigentlich liefern sollte. Eine Abweichung von den Sollwerten kann darauf hindeuten, dass der Sensor 16 fehlerhaft ist und die Messdaten zum Beispiel mittels eines Kalibrier- oder Korrekturkoeffizienten (bzw. Sensorkalibrierwert) angepasst werden müssen.

Wie einleitend erläutert, haben die Erfinder zusätzlich erkannt, dass für etwaige Abweichungen von den Sollwerten auch anderweitige Störungen und insbesondere eine Abschwächung durch die Atmosphäre verantwortlich sein können. Um die Kalibriergüte und somit Messgenauigkeit zu verbessern, sieht die Anordnung 10 des gezeigten Beispiels deshalb zusätzlich eine Erfassungseinheit 22 vor, die ebenfalls in der Strahlungsquelleneinheit 18 in Form des Raman-Lidar-Systems bereitgestellt ist.

Wie durch den Doppelpfeil in Figur 1 angedeutet, wird bei Aussenden des Laserstrahls 21 ein gewisser Anteil durch die Atmosphäre des Himmelskörpers 14 in Richtung der Strahlungsquelleneinheit 18 rückgestreut. Dieser rückgestreute Anteil kann durch die Erfassungseinheit 22 erfasst werden. Hieraus kann anschließend auf Eigenschaften der Atmosphäre geschlossen werden, die zum Beispiel mittelbar oder unmittelbar auf eine Abschwächung der ausgesendeten Strahlung vor dem Erreichen des Sensor 16 schließen lassen. Geeignete Eigenschaften sind zum Beispiel die chemische Zusammensetzung der Atmosphäre oder zumindest das Ermitteln der Gase in der Atmosphäre mit der höchsten Konzentration. Zusätzlich oder alternativ können eine Temperatur oder ein Temperaturprofil der Atmosphäre und/oder die Extension der ausgesendeten Strahlung durch die Atmosphäre ermittelt werden.

Die ermittelten Eigenschaften werden anschließend bei der Kalibrierung des Sensors 16 als Atmosphärenkorrekturwert berücksichtigt. Hierfür kann zum Beispiel auf Transmissionsmodelle auf der Grundlage des Beer-Lambert-Gesetzes zurückgegriffen werden (sh. Liou, K. N. (1980): An Introduction to Atmospheric Radiation, Academic Press, San Diego). Wie erwähnt, können die dafür notwendigen Atmosphärenparameter (zum Beispiel Gaszusammensetzung, Temperatur, Extinktions- oder Rückstreuprofil) mittels der Erfassungseinheit 22 ermittelt werden, vorzugsweise zeitgleich zu dem Erfassen des Laserstrahls 21 durch den Sensor 16. Optional können in derartigen Transmissionsmodellen auch inelastische Streuprozesse an den Gasmolekülen in der Atmosphäre durch entsprechende Absorptionskoeffizienten beschrieben werden. Diese lassen sich aus den von der Erfassungseinheit 22 gemessenen Konzentrationsprofilen in der Atmosphäre (insbesondere Gaskonzentrationsprofilen) und den dazugehörigen Absorptionsquerschnitten bestimmen. Letztere können z.B. der HITRAN (High Resolution Transmission) Datenbank (http:/fwww.hitran.org/) entnommen werden. Diese Datenbank enthält neben spektroskopischen Parametern auch Absorptionsquerschnitte für eine Reihe von Molekülen in dem betrachteten Frequenzbereich.

Um die Abschwächung durch die Atmosphäre rechnerisch zu kompensieren, kann der ermittelte Atmosphärenkorrekturwert schließlich von den eigentlich erwarteten Messdaten-Sollwerten des Sensors 16 abgezogen werden oder zu den tatsächlich abgeleiteten Messdaten (d. h. den Istwerten) hinzuaddiert werden. Dies kann wiederum mittels Recheneinheiten 24, 26 des nachfolgend erläuterten Bodenkontrollzentrums 19 erfolgen.

In Figur 2 sind weitere Funktionseinheiten der Anordnung 10 aus Figur 1 gezeigt. Zunächst erkennt man den lediglich schematisch als Block wiedergegebenen Satelliten 12 umfassend den Sensor 16. Ferner erkennt man die Strahlungsquelleneinheit 18, umfassend die Strahlungsquelle 20 und die Erfassungseinheit 22. Die letzteren beiden Komponenten sind an eine Steuereinheit 30 angeschlossen, um den Laserstrahl 21 präzise auf den Satelliten 12 bzw. dessen Sensor 16 richten zu können. Auch die Erfassungseinheit 22 kann entsprechend ausgerichtet werden, um den durch die Atmosphäre rückgestreuten Anteil zuverlässig erfassen zu können.

Die Steuereinheit 30 wirkt mit einer Kontrolleinheit 32 zusammen, um die Ausrichtung des Laserstrahls 21 und der Erfassungseinheit 22 zu steuern. Hierfür ist die Kontrolleinheit 32 signalübertragend mit einem Satellitentracker 34 verbunden, der die Position des Satelliten 12 (und somit des Sensors 16) beispielsweise mittels GPS erfasst. Ebenso ist in dem gezeigten Beispiel ein per Software realisiertes Bahnrechnungsmodell 36 vorgesehen, mit dem zum Beispiel die erwarteten Bewegungen des Satelliten 12 berechnet werden. Die Informationen des Satellitentrackers 34 und das Bahnrechnungsmodells 36 werden von der Kontrolleinheit 32 verarbeitet, um entsprechende Steuersignale an die Steuereinheit 30 auszugeben, welche wiederum die Strahlungsquelle 20 und Erfassungseinheit 22 geeignet ansteuert und ausrichtet.

Übergeordnet (d. h. nicht lediglich auf die konkrete Ausführungsform beschränkt) kann in diesem Zusammenhang folgendes festgehalten werden: Die Kontrolleinheit 32 ist eine technische Einrichtung, die den Status des Lidar-Systems bzw. eines Kalibrierungsfeldes mit mehreren Lidar -Systemen ermitteln, auswerten, notwendige Maßnahmen in Steuerbefehle umsetzen und mittels einer Kommunikationseinheit an Steuereinheiten übertragen kann. Darüber hinaus kann sie über Kommunikationseinheiten Befehle oder Signale von dem Bodenkontrollzentrum 18 und den Satelliten 12 empfangen, um sie ebenfalls auszuwerten, notwendige Maßnahmen in Steuerbefehle umzusetzen und an die Steuereinheit 30 zu übertragen. Bei den Steuerbefehlen kann es sich um über Kabel, Funk oder andere Übertragungswege übermittelte Signale bzw. Signalfolgen handeln, mit denen Handlungsanweisungen an die Lidar-Systeme (z.B. zur Änderung der Position und Ausrichtung des Lidar-Systems, zum An- und Abschalten der Laser, zur Änderung der Intensität, der Frequenz und der Polarisation der Laserstrahlung) übertragen werden können. Die Steuereinheit 30 ist eine technische Einrichtung, die Steuerbefehle von der Kontrolleinheit 32 empfangen, auswerten und in gerichtete Maßnahmen zur Konfiguration des Lidar-Systems umsetzen kann.

Die Strahlungsquelleneinheit 18 ist über einen Signalpfad 38 mit dem Bodenkontrollzentrum 19 und dessen nachfolgend erläuterten Recheneinheiten verbunden. Das Bodenkontrollzentrum 19 umfasst zunächst eine Satellitendatenempfangseinheit 40, um die Messdaten des Satelliten 16 per drahtlosem Übertragungsweg 42 zu empfangen. Diese Messdaten werden allgemein zum Erstellen von numerischen Daten und/oder Bilddaten ausgewertet, werden insbesondere im Rahmen eines Kalibriervorgangs aber auch in eine Kalibrierrecheneinheit 26 eingespeist.

Ferner ist eine Korrekturrecheneinheit 24 vorgesehen, die über den Signalpfad 38 Informationen über den rückgestreuten Strahlungsanteil erhält, die von der Erfassungseinheit 22 erfasst wurden. Die Korrekturrecheneinheit 24 ist dazu ausgebildet, aus diesen Informationen, welche zum Beispiel jegliche der vorstehend genannten Atmosphäreneigenschaften betreffen können, einen Atmosphärenkorrekturwert zu berechnen.

Dieser Atmosphärenkorrekturwert wird an die Kalibrierrecheneinheit 26 übertragen, welche auch bereits die tatsächlichen Messdaten des Sensors 16 erhalten hat. Weiterhin ist die Kalibrierrecheneinheit 26 dazu ausgebildet, Messdaten-Sollwerte in Abhängigkeit der Intensität des ausgesendeten Laserstrahls 21 zu bestimmen. In der vorstehend erläuterten Weise kann die Kalibrierrecheneinheit 26 den Atmosphärenkorrekturwert mit diesen Sollwerten oder aber den tatsächlich ermittelten Messdaten des Sensors 16 verrechnen, um den Atmosphäreneinfluss und insbesondere eine etwaige Abschwächung des Laserstrahls 21 rechnerisch zu kompensieren. Anschließend wird eine Differenz der Messdaten-Sollwerten und der tatsächlich ermittelten Sollwerte (d. h. der Istwerte) gebildet, wobei zumindest einer dieser Werte in der erläuterten Weise mit dem Atmosphärenkorrekturwert vorab korrigiert wurde.

Sofern die Differenz verschieden von Null ist und/oder außerhalb eines vorbestimmten Toleranzbereiches liegt, deutet dies daraufhin, dass der Sensor tatsächlich ungenaue Ergebnisse liefert. Die entsprechende Abweichung kann als Sensorkalibrierwert hinterlegt werden und in an sich bekannter Weise mit zukünftig von dem Sensor 16 gelieferten Messdaten verrechnet werden, um die Messgenauigkeit zu erhöhen.

Zu beachten ist ferner, dass die Ermittlung des rückgestreuten Strahlungsanteils und des Ableitens der Messdaten des Sensors 16 im Wesentlichen oder vollständig zeitgleich erfolgt. Mit anderen Worten werden die Atmosphärenbedingungen und somit der Atmosphärenkorrekturwert unmittelbar bezogen auf den Zeitpunkt der Messung durch den Sensor 16 ermittelt.

Es versteht sich, dass sämtliche oder auch nur ausgewählte der erläuterten Einheiten 40, 24 und 26 des Bodenkontrollzentrums 19 auch in einer gemeinsamen Recheneinheit zusammengefasst sein können. Die einzelnen Funktionen der entsprechenden Einheiten 40, 24 und 26 können dann über entsprechende Softwaremodule in der gemeinsamen Recheneinheit bereitgestellt werden.

Die gezeigte Ausführungsform der Anordnung 10 und des Verfahrens bietet insgesamt den Vorteil, dass ein Atmosphäreneinfluss auf den Kalibriervorgang des Sensors 16 zumindest teilweise oder auch im Wesentlichen vollständig berücksichtigt werden kann. Es ist somit nicht länger erforderlich, die Kalibrierung bei vorbestimmten atmosphärischen Bedingungen oder über vorbestimmten Gebieten der Himmelskörperoberfläche auszuführen. Dies erhöht sowohl die Flexibilität als auch die Messgenauigkeit, da die Kalibrierung zum Beispiel unmittelbar über tatsächlich zu vermessenden bzw. fernzuerkundenden Gebieten und auch während denselben atmosphärischen Bedingungen ausgeführt werden kann, bei dem die schlussendliche Vermessung des Himmelskörpers 14 stattfindet.

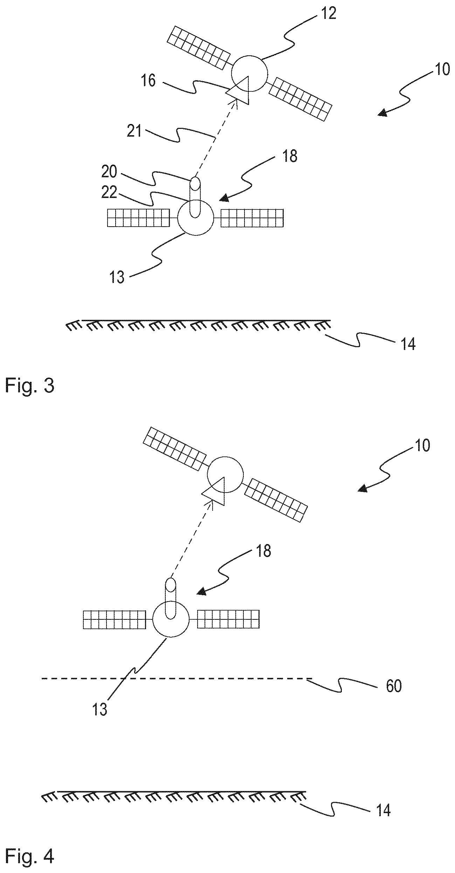

In Fig. 3 ist ein drittes Ausführungsbeispiel gezeigt, bei der eine erfindungsgemäße Anordnung 10 ein erfindungsgemäßes Verfahren ausführt. Erneut ist ein Flugobjekt in Form eines Satelliten 12 gezeigt, der einen Sensor 16 umfasst. Ferner erkennt man eine Strahlungsquelleneinheit 18, die als Raman-Lidar-System ausgebildet ist und analog zu dem vorigen Ausführungsbeispiel mittels einer Strahlungsquelle 20 elektromagnetische Strahlung in Form eines Laserstrahls 21 in Richtung des Sensors 16 aussendet. Weiter umfasst die Strahlungsquelleneinheit auch eine Erfassungseinheit 22, um rückgestreute Strahlungsanteile zu erfassen. Die Strahlungsquelleneinheit 18, das Flugobjekt 12 sowie sämtliche der vorstehend erläuterten Funktionen hiervon und Wechselwirkungen hierzwischen sowie der allgemeinen Kalibriervorgang sind dabei analog zu dem vorigen Ausführungsbeispiel ausgebildet bzw. vorgesehen. Ein Unterschied liegt jedoch dahingehend vor, dass die Strahlungsquelleneinheit 18 nicht bodenmontiert ist, sondern an einem Strahlungs-Flugobjekt 13 angeordnet ist. Hierbei kann es sich um jegliches geeignete Flugobjekt handeln, wobei in dem gezeigten Fall jedoch ein sich in einem Orbit um den Himmelskörper 14 befindender Satellit gewählt ist. Hierdurch lässt sich zum Beispiel erreichen, dass aufgrund der reduzierten Distanz zwischen der Strahlungsquelleneinheit 18 und dem Flugobjekt 12 weniger störende Atmosphäreneinflüsse auftreten können.

In Figur 4 ist ein viertes Ausführungsbeispiel gezeigt, bei der eine erfindungsgemäße Anordnung 10 ein erfindungsgemäßes Verfahren ausführt. Diese Anordnung 10 ist analog zu dem Ausführungsbeispiel der Figur 3 ausgebildet und umfasst entsprechend ein Strahlungs-Flugobjekt 13 mit einer daran angebrachten Strahlungsquelleneinheit 18. In diesem Fall befindet sich das Strahlungs-Flugobjekt 13 jedoch oberhalb von der Troposphärenoberkante 60 (d. h. oberhalb der Tropopause). Gegenüber dem Beispiel aus Figur 3 können Einflüsse der Troposphäre und der Tropopause auf den Kalibriervorgang folglich gezielt ausgeschlossen werden. Oberhalb der Tropopause könnten beispielsweise jedoch noch polare Stratosphärenwolken oder Mesosphärenwolken - sofern vorhanden - eine abschwächende Wirkung auf die ausgesendete elektromagnetische Strahlung haben und damit eine Atmosphärenkorrektur erforderlich machen.

Bei jeglichem der vorstehenden Ausführungsbeispiele kann auch vorgesehen sein, auf Basis der geschilderten (Rück-)Strahlungserfassung einen Atmosphärenkorrekturwert zu ermitteln, der prinzipiell zum Kalibrieren aber auch für andere Zwecke verwendbar ist. Zum Beispiel können hiermit im Rahmen eines Messbetriebs des Sensors 16 gewonnene Messdaten korrigiert oder, mit anderen Worten, atmosphärenbereinigt werden, ohne den Sensor 16 selbst zu kalibrieren. Letzteres kann hingegen in einem gesonderten Kalibrierbetrieb und ebenfalls auf Basis des Atmosphärenkorrekturwerts erfolgen.

Es ist auch möglich (aber nicht beansprucht), dass es sich bei der in Figur 4 dargestellten Grenze 60 um eine Atmosphärengrenze handelt. In diesem Fall können Atmosphäreneinflüsse im Wesentlichen (oder auch vollständig) ausgeschlossen werden. Der Kalibriervorgang kann dann besonders präzise durchgeführt werden. In diesem Fall kann die Strahlungsquelleneinheit 18 gegenüber den vorangehenden Beispielen vereinfacht werden und beispielsweise eine Laserquelle umfassen. Insbesondere muss die Strahlungsquelleneinheit 18 in diesem Fall nicht zwingend dazu eingerichtet sein, Rückstreusignale empfangen zu können.

## Patentansprüche

1. Verfahren zum Kalibrieren flugobjektmontierter Sensoren (16), umfassend die Schritte:
- Aussenden elektromagnetischer Strahlung mit einem Lidar-System (18) von der Oberfläche eines Himmelkörpers (14) oder von einem Strahlungs-Flugobjekt (13) in die Atmosphäre des Himmelskörpers (14);
- Erfassen eines von der Atmosphäre des Himmelskörpers (14) rückgestreuten Anteils der Strahlung mittels des Lidar Systems (18);
- Erfassen der ausgesendeten Strahlung mittels wenigstens eines Sensors (16), der an einem sich relativ zu dem Himmelskörper (14) oder dem Strahlungs-Flugobjekt (13) bewegenden Flugobjekt (12) montiert ist, Ableiten von Messdaten basierend auf dieser Erfassung und Übertragen der Messdaten an eine Recheneinheit (26); und
- Kalibrieren des Sensors (16) auf Basis der Messdaten und des rückgestreuten Anteils der ausgesendeten Strahlung mit der Recheneinheit (26) durch Ermitteln von Parametern zur Korrektur zukünftiger Messdaten.

2. Verfahren nach Anspruch 1, ferner umfassend den Schritt:
- Ermitteln eines Atmosphärenkorrekturwertes basierend auf dem rückgestreuten Anteil der elektromagnetischen Strahlung;
insbesondere wobei der Atmosphärenkorrekturwert die Abschwächung der ausgesendeten elektromagnetischen Strahlung durch die Atmosphäre betrifft.

3. Verfahren nach Anspruch 2,
wobei zum Ermitteln des Atmosphärenkorrekturwertes wenigstens eine der folgenden Eigenschaften der Atmosphäre ermittelt wird:
- zumindest ein Teil der chemischen Zusammensetzung der Atmosphäre;
- wenigstens ein Temperaturwert der Atmosphäre;
- die Extinktion der ausgesendeten Strahlung durch die Atmosphäre.

4. Verfahren nach einem der vorangehenden Ansprüche,
wobei das Aussenden der Strahlung und das Erfassen des rückgestreuten Anteils der Strahlung im Wesentlichen in demselben Bereich des Himmelskörpers stattfinden.

5. Verfahren nach einem der vorangehenden Ansprüche,
ferner umfassend den Schritt:
- Erstellen von numerischen Daten und/oder Bilddaten und/oder thermischen Daten basierend auf den abgeleiteten Messdaten, wobei der Sensor (16) hierfür vorzugsweise gemäß einem der vorangehenden Ansprüche vorab kalibriert wurde.

6. Verfahren nach einem der vorangehenden Ansprüche,
wobei der Schritt des Erfassens der rückgestreuten Strahlung und des Erfassens der ausgesendeten Strahlung mittels des Sensors (16) im Wesentlichen gleichzeitig, zumindest teilweise zeitlich überlappend oder unmittelbar aufeinanderfolgend ausgeführt werden.

7. Verfahren nach einem der vorangehenden Ansprüche,
wobei die Messdaten einen Intensitätswert und/oder einen Phasenwert und/oder einen Frequenzwert und/oder einen Polarisationswert der erfassten elektromagnetischen Strahlung betreffen.

8. Verfahren nach einem der vorangehenden Ansprüche,
wobei der Schritt des Kalibrierens das Ermitteln eines Sollwertes der Messdaten umfasst, insbesondere wobei der Sollwert in Abhängigkeit der Intensität der ausgesendeten elektromagnetischen Strahlung ermittelt wird.

9. Verfahren nach Anspruch 2 und 8,
wobei der Schritt des Kalibrierens ferner das Berücksichtigen eines Sensorkalibrierwertes umfasst, der unter Berücksichtigung des Atmosphärenkorrekturwerts aus der Differenz des Sollwertes der Messdaten und der tatsächlich abgeleiteten Messdaten ermittelt wird, insbesondere wobei die elektromagnetische Strahlung von einem Strahlungs-Flugobjekt (13) ausgesendet wird, das sich oberhalb von einer Troposphärenoberkante (60) befindet.

10. Anordnung (10) zum Kalibrieren flugobjektmontierter Sensoren (16),
mit:
- einer Strahlungsquelleneinheit (18), die an einem Himmelskörper (14) oder an einem Strahlungs-Flugobjekt (13) angeordnet ist; und
- einem Flugobjekt (12), das sich relativ zu dem Himmelskörper (14) oder dem Strahlungs-Flugobjekt (13) bewegt;
wobei die Strahlungsquelleneinheit (18) eine Strahlungsquelle (20) in Form eines Lidar-Systems zum Aussenden elektromagnetischer Strahlung in die Atmosphäre des Himmelskörpers (14) und eine Erfassungseinheit (22) zum Erfassen eines von der Atmosphäre des Himmelskörpers (14) rückgestreuten Strahlungsanteils umfasst;
wobei das Flugobjekt (12) wenigstens einen Sensor (16) zum Erfassen der von der Strahlungsquelle (20) ausgesendeten elektromagnetischen Strahlung umfasst und eingerichtet ist, basierend auf dieser Erfassung Messdaten abzuleiten; und
wobei die Anordnung (10) ferner eine Recheneinheit (26) umfasst, an die die Messdaten übertragbar sind und die dazu eingerichtet ist, den Sensor (16) des Flugobjekts (12) basierend auf dem erfassten rückgestreuten Strahlungsanteil und den Messdaten durch Ermitteln von Parametern zur Korrektur zukünftiger Messdaten zu kalibrieren.

11. Anordnung (10) nach Anspruch 10,
wobei die elektromagnetische Strahlung von einem Strahlungs-Flugobjekt (13) ausgesendet wird, das sich oberhalb von einer Troposphärenoberkante (60) befindet.

12. Verfahren, umfassend:
- Aussenden elektromagnetischer Strahlung mit einem Lidar-System (18) von der
Oberfläche eines Himmelskörpers (14) oder von einem Strahlungs-Flugobjekt (13) in die Atmosphäre des Himmelskörpers (14);
- Erfassen eines von der Atmosphäre des Himmelkörpers (14) rückgestreuten Anteils der Strahlung mittels des Lidar Systems (18);
- Erfassen der ausgesendeten Strahlung mittels wenigstens eines Sensors (16), der an einem sich relativ zu dem Himmelskörper (14) oder dem Strahlungs-Flugobjekt (13) bewegenden Flugobjekt (12) montiert ist, und Ableiten von Messdaten basierend auf dieser Erfassung;
- Ermitteln eines Atmosphärenkorrekturwertes basierend auf dem rückgestreuten Anteil der elektromagnetischen Strahlung.

13. Verfahren nach Anspruch 12,
wobei die elektromagnetische Strahlung von einem Strahlungs-Flugobjekt (13) ausgesendet wird, das sich oberhalb von einer Troposphärenoberkante (60) befindet.

14. Anordnung (10), mit:
- einer Strahlungsquelleneinheit (18), die an einem Himmelskörper (14) oder an einem Strahlungs-Flugobjekt (13) angeordnet ist; und
- einem Flugobjekt (12), das sich relativ zu dem Himmelskörper (14) oder dem Strahlungs-Flugobjekt (13) bewegt;
wobei die Strahlungsquelleneinheit (18) eine Strahlungsquelle (20) in Form eines Lidar-Systems zum Aussenden elektromagnetischer Strahlung in die Atmosphäre des Himmelskörpers (14) und eine Erfassungseinheit (22) zum Erfassen eines von der Atmosphäre des Himmelskörpers (14) rückgestreuten Strahlungsanteils umfasst;
wobei das Flugobjekt (12) wenigstens einen Sensor (16) zum Erfassen der von der Strahlungsquelle (20) ausgesendeten elektromagnetischen Strahlung umfasst und eingerichtet ist, basierend auf dieser Erfassung Messdaten abzuleiten; und
wobei die Anordnung (10) ferner eine Recheneinheit (26) umfasst, die dazu eingerichtet ist, einen Atmosphärenkorrekturwert basierend auf dem rückgestreuten Anteil der elektromagnetischen Strahlung zu ermitteln.

15. Anordnung (10) nach Anspruch 14,
wobei die elektromagnetische Strahlung von einem Strahlungs-Flugobjekt (13) ausgesendet wird, das sich oberhalb von einer Troposphärenoberkante (60) befindet.

## Claims

1. A method for calibrating flying-object-mounted sensors (16), comprising the steps of:
- emitting electromagnetic radiation, using a LiDAR system (18), from the surface of a celestial body (14) or from a radiating flying object (13) into the atmosphere of the celestial body (14);
- detecting a component of the radiation which is backscattered by the atmosphere of the celestial body (14) by means of the LiDAR system (18);
- detecting the emitted radiation by means of at least one sensor (16), which is mounted on a flying object (12) moving relative to the celestial body (14) or the radiating flying object (13), deriving measured data on the basis of this detection and transmitting the measured data to an arithmetic logic unit (26); and
- calibrating the sensor (16) on the basis of the measured data and the backscattered component of the emitted radiation by means of the arithmetic logic unit (26) by identifying parameters for correcting future measured data.

2. The method according to claim 1, further comprising the step of:
- identifying an atmosphere correction value on the basis of the backscattered component of the electromagnetic radiation;
in particular wherein the atmosphere correction value relates to the attenuation of the emitted electromagnetic radiation by the atmosphere.

3. The method according to claim 2,
wherein, to identify the atmosphere correction value, at least one of the following properties of the atmosphere is identified:
- at least one part of the chemical composition of the atmosphere;
- at least one temperature value of the atmosphere;
- the extinction of the emitted radiation by the atmosphere.

4. The method according to any one of the preceding claims,
wherein the radiation is emitted and the backscattered component of the radiation is detected substantially in the same region of the celestial body.

5. The method according to any one of the preceding claims, further comprising the step of:
- compiling numerical data and/or image data and/or thermal data on the basis of the derived measured data, wherein the sensor (16) has preferably previously been calibrated for this purpose according to any one of the preceding claims.

6. The method according to any one of the preceding claims, wherein the step of detecting the backscattered radiation and of detecting the emitted radiation by means of the sensor (16) are carried out substantially simultaneously, so to overlap at least in part, or directly in succession.

7. The method according to any one of the preceding claims, wherein the measured data relate to an intensity value and/or a phase value and/or a frequency value and/or a polarization value of the detected electromagnetic radiation.

8. The method according to any one of the preceding claims,
wherein the calibrating step comprises identifying a target value of the measured data, in particular wherein the target value is identified on the basis of the intensity of the emitted electromagnetic radiation.

9. The method according to claims 2 and 8,
wherein the calibrating step further comprises taking into account a sensor calibration value, which is identified from the difference between the target value of the measured data and the actually derived measured data taking into account the atmosphere correction value, in particular wherein the electromagnetic radiation is emitted by a radiating flying object (13) which is located above an upper boundary (60) of the troposphere.

10. An assembly (10) for calibrating flying-object-mounted sensors (16), comprising:
- a radiation source unit (18), which is arranged on a celestial body (14) or on a radiating flying object (13); and
- a flying object (12), which moves relative to the celestial body (14) or the radiating flying object (13);
wherein the radiation source unit (18) comprises a radiation source (20) in the form of a LiDAR system for emitting electromagnetic radiation into the atmosphere of the celestial body (14) and a detection unit (22) for detecting a radiation component backscattered from the atmosphere of the celestial body (14);
wherein the flying object (12) comprises at least one sensor (16) for detecting the electromagnetic radiation emitted by the radiation source (20) and is configured to derive measured data on the basis of this detection; and
wherein the assembly (10) further comprises an arithmetic logic unit (26), to which the measured data can be transmitted and which is configured to calibrate the sensor (16) of the flying object (12) on the basis of the detected backscattered radiation component and the measured data by identifying parameters for correcting future measured data.

11. The assembly (10) according to claim 10,
wherein the electromagnetic radiation is emitted by a radiating flying object (13) which is located above an upper boundary (60) of the troposphere.

12. A method comprising:
- emitting electromagnetic radiation, using a LiDAR system (18), from the surface of a celestial body (14) or from a radiating flying object (13) into the atmosphere of the celestial body (14);
- detecting a component of the radiation which is backscattered by the atmosphere of the celestial body (14) by means of the LiDAR system (18);
- detecting the emitted radiation by means of at least one sensor (16), which is mounted on a flying object (12) moving relative to the celestial body (14) or the radiating flying object (13), and deriving measured data on the basis of this detection;
- identifying an atmosphere correction value on the basis of the backscattered component of the electromagnetic radiation.

13. The method according to claim 12,
wherein the electromagnetic radiation is emitted by a radiating flying object (13) which is located above an upper boundary (60) of the troposphere.

14. An assembly (10) comprising:
- a radiation source unit (18), which is arranged on a celestial body (14) or on a radiating flying object (13); and
- a flying object (12), which moves relative to the celestial body (14) or the radiating flying object (13);
wherein the radiation source unit (18) comprises a radiation source (20) in the form of a LiDAR system for emitting electromagnetic radiation into the atmosphere of the celestial body (14) and a detection unit (22) for detecting a radiation component backscattered from the atmosphere of the celestial body (14);
wherein the flying object (12) comprises at least one sensor (16) for detecting the electromagnetic radiation emitted by the radiation source (20) and is configured to derive measured data on the basis of this detection; and
wherein the assembly (10) further comprises an arithmetic logic unit (26), which is configured to identify an atmosphere correction value on the basis of the backscattered component of the electromagnetic radiation.

15. The assembly (10) according to claim 14,
wherein the electromagnetic radiation is emitted by a radiating flying object (13) which is located above an upper boundary (60) of the troposphere.

## Revendications

1. Procédé d'étalonnage de capteurs montés sur un objet volant (16), comprenant les étapes consistant à :
- émettre des rayonnements électromagnétiques, en utilisant un système LiDAR (18), depuis la surface d'un corps céleste (14) ou depuis un objet volant rayonnant (13) dans l'atmosphère du corps céleste (14) ;
- détecter une composante du rayonnement qui est rétrodiffusée par l'atmosphère du corps céleste (14) au moyen du système LiDAR (18) ;
- détecter les rayonnements émis au moyen d'au moins un capteur (16), qui est monté sur un objet volant (12) se déplaçant par rapport au corps céleste (14) ou à l'objet volant rayonnant (13), dériver des données mesurées sur la base de cette détection et transmettre les données mesurées à une unité logique arithmétique (26) ; et
- étalonner le capteur (16) sur la base des données mesurées et de la composante rétrodiffusée des rayonnements émis au moyen de l'unité logique arithmétique (26) en identifiant les paramètres destinés à corriger des données mesurées futures.

2. Procédé selon la revendication 1, comprenant en outre l'étape consistant à :
- identifier une valeur de correction atmosphérique sur la base de la composante rétrodiffusée des rayonnements électromagnétiques ;
en particulier dans lequel la valeur de correction atmosphérique est liée à l'atténuation des rayonnements électromagnétiques émis par l'atmosphère.

3. Procédé selon la revendication 2,
dans lequel, pour identifier la valeur de correction atmosphérique, au moins l'une des propriétés suivantes de l'atmosphère est identifiée :
- au moins une partie de la composition chimique de l'atmosphère ;
- au moins une valeur de température de l'atmosphère ;
- l'extinction des rayonnements émis par l'atmosphère.

4. Procédé selon l'une quelconque des revendications précédentes,
dans lequel les rayonnements sont émis et la composante rétrodiffusée des rayonnements est détectée essentiellement dans la même région du corps céleste.

5. Procédé selon l'une quelconque des revendications précédentes, comprenant en outre l'étape consistant à :
- compiler des données numériques et/ou des données d'image et/ou des données thermiques sur la base des données mesurées dérivées, dans lequel le capteur (16) a préférentiellement précédemment été étalonné dans ce but selon l'une quelconque des revendications précédentes.

6. Procédé selon l'une quelconque des revendications précédentes, dans lequel l'étape consistant à détecter les rayonnements rétrodiffusés et à détecter les rayonnements émis au moyen du capteur (16) sont mises en œuvre de manière essentiellement simultanée, de sorte à se superposer au moins en partie, ou directement de manière successive.

7. Procédé selon l'une quelconque des revendications précédentes, dans lequel les données mesurées concernent une valeur d'intensité et/ou une valeur de phase et/ou une valeur de fréquence et/ou une valeur de polarisation des rayonnements électromagnétiques détectés.

8. Procédé selon l'une quelconque des revendications précédentes,
dans lequel l'étape consistant à étalonner comprend une étape consistant à identifier une valeur cible des données mesurées, en particulier dans lequel la valeur cible est identifiée sur la base de l'intensité des rayonnements électromagnétiques émis.

9. Procédé selon les revendications 2 et 8,
dans lequel l'étape consistant à étalonner comprend en outre une étape consistant à prendre en compte une valeur d'étalonnage de capteurs, qui est identifiée à partir de la différence entre la valeur cible des données mesurées et les données mesurées réellement dérivées en prenant en compte la valeur de correction atmosphérique, en particulier dans lequel les rayonnements électromagnétiques sont émis par un objet volant rayonnant (13) qui est situé au-dessus d'une limite supérieure (60) de la troposphère.

10. Ensemble (10) destiné à étalonner des capteurs montés sur un objet volant (16), comprenant :
- une unité de source de rayonnements (18), qui est agencée sur un corps céleste (14) ou sur un objet volant rayonnant (13) ; et
- un objet volant (12), qui se déplace par rapport au corps céleste (14) ou à l'objet volant rayonnant (13) ;
dans lequel l'unité de source de rayonnement (18) comprend une source de rayonnements (20) sous la forme d'un système LiDAR pour émettre des rayonnements électromagnétiques dans l'atmosphère du corps céleste (14) et une unité de détection (22) pour détecter une composante de rayonnement rétrodiffusée depuis l'atmosphère du corps céleste (14) ;
dans lequel l'objet volant (12) comprend au moins un capteur (16) pour détecter les rayonnements électromagnétiques émis par la source de rayonnements (20) et est configuré pour dériver les données mesurées sur la base de cette détection ; et
dans lequel l'ensemble (10) comprend en outre une unité logique arithmétique (26), à laquelle les données mesurées peuvent être transmises et qui est configurée pour étalonner le capteur (16) de l'objet volant (12) sur la base de la composante de rayonnement rétrodiffusée détectée et des données mesurées en identifiant les paramètres destinés à corriger les données mesurées futures.

11. Ensemble (10) selon la revendication 10,
dans lequel les rayonnements électromagnétiques sont émis par un objet volant rayonnant (13) qui est situé au-dessus d'une limite supérieure (60) de la troposphère.

12. Procédé comprenant les étapes consistant à :
- émettre des rayonnements électromagnétiques, en utilisant un système LiDAR (18), depuis la surface d'un corps céleste (14) ou depuis un objet volant rayonnant (13) dans l'atmosphère du corps céleste (14) ;
- détecter une composante du rayonnement qui est rétrodiffusée par l'atmosphère du corps céleste (14) au moyen du système LiDAR (18) ;
- détecter les rayonnements émis au moyen d'au moins un capteur (16), qui est monté sur un objet volant (12) se déplaçant par rapport au corps céleste (14) ou à l'objet volant rayonnant (13), et dériver des données mesurées sur la base de cette détection ;
- identifier une valeur de correction atmosphérique sur la base de la composante rétrodiffusée des rayonnements électromagnétiques.

13. Procédé selon la revendication 12,
dans lequel les rayonnements électromagnétiques sont émis par un objet volant rayonnant (13) qui est situé au-dessus d'une limite supérieure (60) de la troposphère.

14. Ensemble (10) comprenant :
- une unité de source de rayonnements (18), qui est agencée sur un corps céleste (14) ou sur un objet volant rayonnant (13) ; et
- un objet volant (12), qui se déplace par rapport au corps céleste (14) ou à l'objet volant rayonnant (13) ;
dans lequel l'unité de source de rayonnement (18) comprend une source de rayonnements (20) sous la forme d'un système LiDAR pour émettre des rayonnements électromagnétiques dans l'atmosphère du corps céleste (14) et une unité de détection (22) pour détecter une composante de rayonnement rétrodiffusée depuis l'atmosphère du corps céleste (14) ;
dans lequel l'objet volant (12) comprend au moins un capteur (16) pour détecter les rayonnements électromagnétiques émis par la source de rayonnements (20) et est configuré pour dériver les données mesurées sur la base de cette détection ; et dans lequel l'ensemble (10) comprend en outre une unité logique arithmétique (26), qui est configurée pour identifier une valeur de correction atmosphérique sur la base de la composante rétrodiffusée des rayonnements électromagnétiques.

15. Ensemble (10) selon la revendication 14,
dans lequel les rayonnements électromagnétiques sont émis par un objet volant rayonnant (13) qui est situé au-dessus d'une limite supérieure (60) de la troposphère.
